# EUROPÄISCHE PATENTSCHRIFT

(11) **EP 2 282 089 B1**
(45) Veröffentlichungstag und Bekanntmachung des Hinweises auf die Patenterteilung: **20.02.2019**
(21) Anmeldenummer: 09010133.8
(22) Anmeldetag: 05.08.2009
(51) Int. Cl.: F16K 15/02, F16K 17/04

(54) **Hydraulikventil**
Hydraulic valve
Soupape hydraulique

(43) Veröffentlichungstag der Anmeldung: 09.02.2011
(73) Patentinhaber: HAWE Hydraulik SE, 85609 Aschheim (DE)
(72) Erfinder: Jemüller, Georg, 81673 München (DE); Niederreiter, Sebastian, 85646 Anzing (DE)
(74) Vertreter: Grosse Schumacher Knauer von Hirschhausen

(56) Entgegenhaltungen:
- EP-A- 1 273 774
- EP-A- 1 380 780
- US-A- 2 490 511
- US-A- 3 650 294
- US-A- 4 237 918
- US-A1- 2003 172 973

## Beschreibung

Die Erfindung betrifft ein Hydraulikventil der im Oberbegriff des Patentanspruchs 1 angegebenen Art.

In solchen Hydraulikventilen, typischerweise Druckbegrenzungsventilen, Lasthalteventilen, Rückschlagventilen, mechanisch entsperrbaren Rückschlagventilen, und dgl., wird das Schließelement von dem Widerlager auf den Ventilsitz zentriert, damit es nach dem Abheben unter der Federbeaufschlagung nicht versetzt aufsetzt. Das Widerlager wird hierzu über den Abhebehub des Schließelements in der Schiebeführung geführt. Um eine sichere Führung zu gewährleisten, muss die Gleitpassung relativ eng sein. Damit dennoch das Druckmittel von der Seite der Feder zum Ventilsitz oder umgekehrt im Wesentlichen ungedrosselt strömen kann, ist es bekannt, im Außendurchmesser oder Außenumfang des Widerlagers Einschnitte oder Abflachungen zu formen, die lokal in der Schiebeführung einen genügend großen Querschnitt für das Druckmittel freihalten. In der Praxis zeigt sich dennoch, dass solche Hydraulikventile zum Pfeifen und Schnarren neigen, wobei die Geräuschentwicklung nicht nur störend ist, sondern auch Grund für gegebenenfalls starken Verschleiß. Der Grund hierfür sind vermutlich die Einschnitte oder Abflachungen im Außenumfang am Außendurchmesser des Widerlagers, die die Führung lokal verschlechtern und ungünstige Strömungsverhältnisse schaffen, und unter der Strömungsdynamik des Druckmittels Relativbewegungen des Widerlagers, der Feder und des Schließelementes mit relativ hoher Frequenz verursachen können.

Bei einem aus US 2003/0172973 A1 bekannten Rückschlagventil ist jeder Durchgang für das Druckmittel, in dem das Schließelement bildenden Federwiderlager quer zu den Bewegungsrichtungen des Schließelements angeordnet. Das im Federwiderlager abgestützte Federende ist in Bewegungsrichtungen des Schließelements relativ weit vom Schließelement beabstandet, um Platz für den jeweiligen Durchgang zu schaffen. Der Führungsbereich des Widerlagers erstreckt sich in den Bewegungsrichtungen des Schließelements nach beiden Seiten relativ weit über das Federende hinaus. In dem Strömungsweg wird das Druckmittel zweifach über je 90° umgelenkt, was erhöhten Drosselwiderstand erzeugt und aus der Strömungsdynamik quer orientierte Kräfte am Widerlager erzeugen kann, die Grund für Vibrationen sind. Aufgrund der quer zu den Bewegungsrichtungen des Schließelements angeordneten Durchgänge im Widerlager und dem langen Führungsbereich des Widerlagers hat das Hydraulikventil unzweckmäßig große Baulänge.

Bei dem aus EP 1 273 774 A bekannten Hydraulikventil bildet das als Kolben ausgebildete Widerlager gleichzeitig das Schließelement und sind quer zur Bewegungsrichtung des Schließelements orientierte fensterförmige Durchgänge im Widerlager vorgesehen. Das sich im Widerlager abstützende Ende der Feder ist deutlich vom Schließelement beabstandet, um Platz für die Durchgänge zu schaffen. Der Führungsbereich des Widerlagers ist lang, woraus insgesamt unzweckmäßig große Baulänge des Hydraulikventils resultiert. Die Strömung des Druckmittels wird bei abgehobenem Schließelement zweifach um 90° umgelenkt, was erhöhten Drosselwiderstand bedeutet. Die zweifache Umlenkung der Strömung kann nicht nur in Querrichtung wirkende Kräfte, sondern auch Betriebsgeräusche erzeugen.

Bei dem aus US 4 237 918 A bekannten Druckluftventil sind im Führungsbereich des Widerlagers Längsdurchgänge geformt, über die das Druckmittel abströmen kann. Dies vermindert den Führungsbereich des Widerlagers.

Bei dem aus US 2 490 511 A bekannten Nadel-Rückschlagventil sind im gleichzeitig das Schließelement bildenden, kolbenförmigen Widerlager für die Feder im Führungsbereich des Widerlagers Längskanäle ausgespart, durch die das Druckmittel abzuströmen vermag. Dies reduziert die zur Führung des Widerlagers mögliche Kontaktfläche zwischen dem Widerlager und der Wand der Führungsbohrung erheblich.

Weiterer Stand der Technik ist enthalten in US 3 650 294 A und EP 1 380 780 A.

Der Erfindung liegt die Aufgabe zugrunde, ein Hydraulikventil der eingangs genannten Art anzugeben, bei dem mit einwandfreier Führung des Widerlagers unerwünschte Betriebsgeräusche und Verschleiß minimiert sind.

Die gestellte Aufgabe wird mit den Merkmalen des Patentanspruchs 1 gelöst.

Da in dem Hydraulikventil am Außendurchmesser oder Außenumfang des Widerlagers keine zur Strömungsführung des Druckmittels notwendigen baulichen Maßnahmen vorgesehen sind, ist die Führung vollumfänglich gleichförmig, so dass die Feder und das Schließelement stets sauber auf den Ventilsitz zentriert sind. Hingegen leitet der Durchgang, der innerhalb des Außendurchmessers des Widerlagers vorgesehen ist, das Druckmittel unter Umgehung des Führungsbereiches ab, so dass dort aus der Strömungsdynamik keine Vibrationen anregenden Kräfte entstehen. Überraschend öffnet und schließt das Hydraulikventil ohne Pfeifen und Schnarren und wegen minimierten Verschleißes über lange Standzeit einwandfrei. Der Durchgang weist an der Federseite im Widerlager eine erste Mündung auf, die zumindest zum Teil außerhalb eines Kontaktbereiches zwischen der Feder und dem Widerlager liegt. Durch diese Positionierung der Mündung wird sichergestellt, dass die Feder das Druckmittel nicht spürbar abdrosselt. An der Seite des Schließelementes ist eine zweite Mündung des Durchgangs am Widerlager und/oder am Schließelement positioniert, so dass der Durchgang entweder nur das Widerlager oder das Widerlager und das Schließelement durchsetzt, im letzten Fall vorausgesetzt, dass das Schließelement hierfür genügend Fleisch hat. Selbst bei relativ kleinem Außendurchmesser des Widerlagers lässt sich der Durchgang mit ausreichend großem Querschnitt ausbilden. Der Durchgang ist eine Bohrung, deren Bohrungsachse parallel zur Bewegungsrichtung des Schließelementes liegt, oder aus Platzgründen gegenüber der Bewegungsrichtung schräg verläuft. Die Richtung der Bohrungsachse richtet sich z.B. nach den Platzverhältnissen an der Federseite und an der Seite des Schließelementes des Widerlagers. Das Widerlager ist allgemein kreisscheibenförmig und beansprucht wenig Einbauraum in den Bewegungsrichtungen des Schließelements.

Bei einer weiteren Ausführungsform ist am Widerlager an der Federseite eine Federzentrierung vorgesehen, wobei der Durchgang zumindest teilweise auch in der Federzentrierung verläuft. Die Federzentrierung soll ein seitliches Ausweichen der Feder oder des Federendes verhindern, um die Federkraft möglichst zentral auf das Widerlager und vom Widerlager auf das Schließelement übertragen bzw. das Widerlager beiden geführten Bewegungen in der Feder positionieren. Dazu kann die Federzentrierung einen Durchmesser annähernd dem Innendurchmesser der Feder haben, was jedoch die Druckmittelströmung auf der Federseite zum oder aus dem Durchgang beeinträchtigen könnte. Wenn jedoch der Durchgang zumindest teilweise auch in der Federzentrierung verläuft, wird ein genügend großer Strömungsquerschnitt geschaffen. Das Widerlager ist allgemein scheibenförmig ausgebildet. Im Übrigen ist das erfindungsgemäße Prinzip besonders zweckmäßig bei Hydraulikventilen mit kleinem Schließelement und relativ kleinem Widerlager.

Zweckmäßig sind bei einer weiteren Ausführungsform um das am Widerlager zentrisch angeordnete Schließelement mehrere Durchgänge regelmäßig oder unregelmäßig verteilt, die gleich groß oder verschieden groß sein können, oder/und gleiche oder ungleiche Formen haben. Auf diese Weise lässt sich insgesamt ein großer Strömungsquerschnitt für eine ungedrosselte Druckmittelströmung erzielen. Außerdem lassen sich gegebenenfalls bei starker Druckmittelströmung am Widerlager abgegebene Kräfte aus der Strömungsdynamik so verteilen, dass keine Kraftkomponenten entstehen, die Quervibrationen des Widerlagers anregen könnten.

Bei einer zweckmäßigen Ausführungsform ist das Schließelement zum Freigeben des Strömungsweges druckabhängig und/oder durch ein den Ventilsitz durchsetzendes Entsperrglied vom Ventilsitz abhebbar. Das erfindungsgemäße Konzept ist demzufolge für Hydraulikventile zweckmäßig, deren Schließelement druckabhängig anspricht und/oder mechanisch entsperrt werden kann.

Zweckmäßig weist das Schließelement eine kugelige oder kegelige Sitzfläche auf, die mit dem Ventilsitz in der Absperrstellung leckagefrei abdichtet. Das Schließelement kann entweder in einer Fassung am Widerlager sitzen (z.B., falls für das Schließelement ein hochwertigeres Material verwendet wird), oder mit dem Widerlager einstückig sein.

In einer zweckmäßigen Ausführungsform ist das Hydraulikventil ein Druckbegrenzungsventil.

Dieses Druckbegrenzungsventil kann ein Vorsteuerventil eines Reglers einer Axialkolbenpumpe sein und wird mit nach außen weisender Feder in eine den Strömungsweg und die Schiebeführung enthaltende, z.B. kleindurchmessrige Bohrung des Reglergehäuses eingebaut. Das Schließglied kann hierbei einen Durchmesser von beispielsweise nur etwa 2 mm haben, während der Außendurchmesser des Widerlagers nur etwa zwischen 7 mm bis 10 mm beträgt. Dennoch lässt sich über den Durchgang oder die mehreren Durchgänge ein genügend großer und freier Durchströmquerschnitt für das Druckmittel realisieren.

Anhand der Zeichnungen werden Ausführungsformen des Erfindungsgegenstandes erläutert. Es zeigen:
- Fig. 1: einen Achsschnitt eines Axialkolbenpumpen-Reglers mit einem Hydraulikventil im Reglergehäuse, und
- Fig. 2 bis 4: Achsschnitte unterschiedlicher Ausführungsformen des Hydraulikventils, jeweils in Absperrstellung.

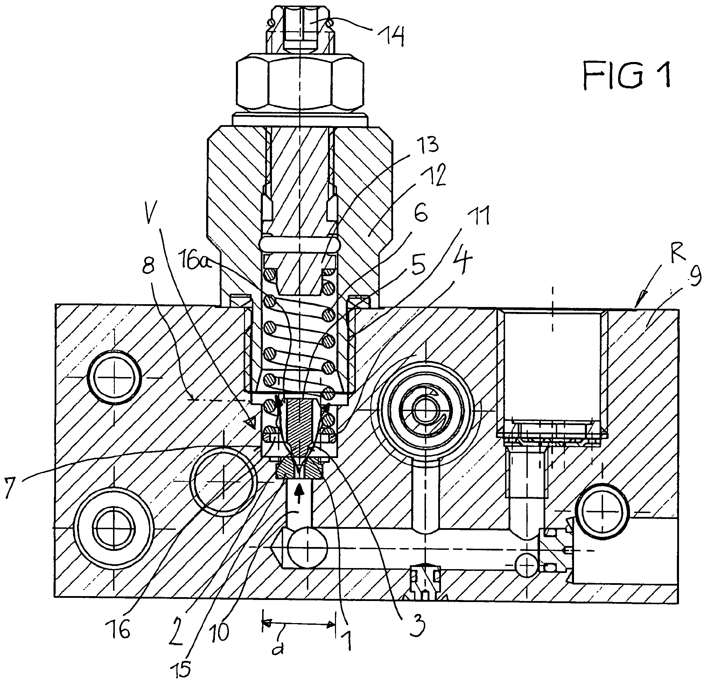

Als ein nicht beschränkendes Beispiel einer Anwendung eines Hydraulikventils V ist in Fig. 1 ein Regler R, beispielsweise für eine Axialkolbenpumpe (nicht gezeigt), illustriert, in welchem das Hydraulikventil V zwischen einem Kanal 10 und einem Kanal 8 in einem Gehäuse 9 angeordnet ist. Das Hydraulikventil V ist in diesem Fall ein sogenanntes Einschraubventil mit einem in eine Gehäusebohrung 11 eingeschraubten Einschraubgehäuse 12, das ein an einer Drehhandhabe 14 axial verstellbares, abgedichtetes Federwiderlager 13 enthält. Ein unterer Teil der Bohrung 11 bildet eine beispielsweise kreiszylindrische Schiebeführung 7 und positioniert einen Einsatz 15 (der beispielsweise verstemmt ist) mit einem Ventilsitz 1 des Hydraulikventils V.

Das Hydraulikventil V besteht aus dem Ventilsitz 1, einem den Ventilsitz 1 an einer Schließseite zugeordneten Schließelement 2 mit kugeliger oder kegeliger Sitzfläche 3, einem allgemein scheibenförmigen Widerlager 4 mit einem kreisförmigen kontinuierlichen Außendurchmesser d, in der gezeigten Ausführungsform einer Federzentrierung 5, und einer Feder 6, die zwischen dem Federwiderlager 13 und dem Widerlager 4 mit Vorspannung eingesetzt ist. Die Vorspannung der Feder 6 kann mittels der Drehhandhabe 14 verändert werden. Das Widerlager 4 ist mit seinem Außendurchmesser d in der Schiebeführung 7 verschiebbar (z.B. mit einer losen Passung oder einer Gleitpassung).

Im Ausführungsbeispiel der Fig. 1 ist das Hydraulikventil V ein Druckbegrenzungsventil, das abhängig von der Federvorspannung und dem Druck im Kanal 10 aus der gezeigten Schließstellung druckabhängig öffnet und Druckmittel in Richtung der Pfeile zu dem im Bereich der Feder 6 und oberhalb des Widerlagers 4 angeordneten Kanal 8 strömen lässt.

Um die Strömung so wenig wie möglich zu drosseln und dennoch eine saubere Führung des Widerlagers 4 bei Bewegungen des Schließelementes 2 in der Schiebeführung 7 sicherzustellen, ist im Widerlager 4 innerhalb des Außendurchmessers d zumindest ein Durchgang 16 vorgesehen. Zweckmäßig sind um das Schließelement 2 sogar mehrere Durchgänge 16 regelmäßig oder unregelmäßig verteilt, wobei, aufgrund des dem Innendurchmesser der Feder 6 annähernd entsprechenden Außendurchmessers der Federzentrierung 5 jeder Durchgang 16 zumindest teilweise (bei 16a angedeutet) auch in der Federzentrierung 5 verläuft.

In Fig. 1 ist das Hydraulikventil V in Öffnungsstellung gezeigt, in der das Druckmittel in Richtung der Pfeile durch die Durchgänge 16 im Widerlager 4 und durch die Feder 6 oder an der Feder 6 vorbei zum Kanal 8 strömt. Entspricht der Druck im Kanal 10 wieder dem an der Feder 6 eingestellten Druckwert, setzt das Schließglied 2 auf dem Ventilsitz 1 leckagefrei absperrend auf. Ein Teil des Querschnitts jedes Durchgangs 16 kann aus Platzgründen von dem auf dem Widerlager 4 aufliegenden Ende der Feder 6 abgedeckt sein. Da jedoch der Durchgang 16 im Bereich 16a auch in der Federzentrierung 5 verläuft, entsteht dennoch kein nennenswerter Drosseleffekt.

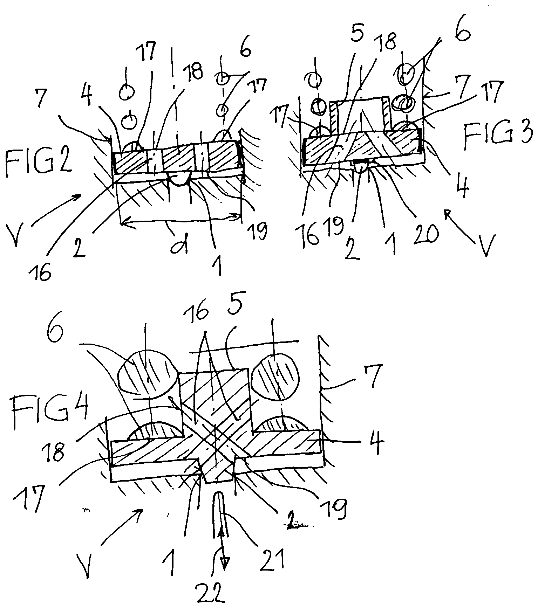

In der Ausführungsform in Fig. 2 ist das Widerlager 4 eine Kreisscheibe, an der das Schließelement 2 mit kugeliger Sitzfläche einstückig und zentral ausgebildet ist. Der Außendurchmesser d des Widerlagers wird in der Schiebeführung 7 geführt, wenn das Schließelement 2 vom Ventilsitz 1 abhebt. Die Durchgänge 16 haben zwischen dem Außendurchmesser d und dem Schließelement 2 jeweils eine Mündung 19 an der Seite des Schließelementes 2, und eine Mündung 18 an der Federseite innerhalb (oder alternativ außrhalb) eines Kontaktbereiches 17 zwischen dem Ende der Feder 6 und dem Widerlager 4. Die Durchgänge 16 sind beispielsweise gleich große Bohrungen mit zur Bewegungsrichtung des Schließelementes 2 parallelen Bohrungsachsen.

In der Ausführungsform in Fig. 3 ist die Federzentrierung 5 als innen hohler Kragen am Widerlager 4 angeordnet. Der Kontaktbereich 17 des Federendes liegt an der Außenseite der Federzentrierung 5. Die Durchgänge 16 haben ihre jeweilige Mündung 19 an der Seite des Schließelementes 2 zwischen dem Außendurchmesser des Widerlagers 4 und dem Schließelement 2, hingegen die Mündung 18 innerhalb der Federzentrierung 5, so dass die Bohrungsachse jedes Durchganges 16 gegenüber der Bewegungsrichtung des Schließelementes 2 schräg verläuft. Das Schließelement 2 ist als separater Teil in einer Fassung 20 am Widerlager 4 zentriert.

Bei der Ausführungsform in Fig. 4 ist, ähnlich wie in Fig. 1, die Federzentrierung 5 ein massiver Ansatz auf der Oberseite des Widerlagers 4. Das Schließelement 2 ist hier mit kegelförmiger Sitzfläche ausgebildet. Obwohl der Kontaktbereich 17 des Endes der Feder 6 an der Federzentrierung 5 liegt, wird das Druckmittel in den Durchgängen 16 nicht abgedrosselt. Die Durchgänge 16 kreuzen beispielsweise einander oder werden in der Federzentrierung 5 schräg aneinander vorbeigeführt, wobei ihre federseitigen Mündungen 18 in der Federzentrierung 5 platziert sind, hingegen die jeweilige Mündung 19 an der Seite des Schließelementes 2 zum Teil im Widerlager 4 und zum Teil im Schließelement 2 liegt.

Die Beispiele in den Fig. 1 bis 4 sind nicht beschränkend auszulegen. Die Anzahl, Verteilung, Ausbildung und Orientierung der Durchgänge 16 kann beliebig gewählt werden, sofern sichergestellt ist, dass der von den Durchgängen 16 gebildete Strömungsweg nicht unzweckmäßig abgedrosselt wird.

In Fig. 4 ist schließlich angedeutet, dass das Hydraulikventil V nicht nur oder überhaupt nicht druckabhängig öffnet, sondern auch oder nur mechanisch durch ein durch den Ventilsitz 1 am Schließelement 2 angreifendes Entsperrglied 21 verstellt werden kann, das in Richtung des Doppelpfeiles 22 bewegbar ist (analog könnte auch mit dem Schließelement 2 ein Verstellkolben gekoppelt sein). Dies könnte beispielsweise bei einem Lasthalteventil zweckmäßig sein. Im Gegensatz zu dem Hydraulikventil V in Fig. 1 könnte in den Hydraulikventilen V der Fig. 2 bis 4 die Strömungsrichtung des Druckmittels bei abgehobenem Schließelement 2 (auch) von der Seite der Feder 6 durch den Durchgang 16 zum Ventilsitz 1 verlaufen.

## Patentansprüche

1. Hydraulikventil (V), mit einem Ventilsitz (1), dem ein in Schließrichtung durch eine Feder (6) belastetes Schließelement (2) zugeordnet ist, das in vom Ventilsitz (1) abgehobener Stellung einen Strömungsweg freigibt, über den Druckmittel von der Seite der Feder in den Ventilsitz oder umgekehrt fließt, wobei zwischen der Feder (6) und dem Schließelement (2) ein das Schließelement (2) auf den Ventilsitz (1) zentrierendes Widerlager (4) für die Feder (6) angeordnet ist, dessen in Bewegungsrichtungen des Schließelementes in einer Schiebeführung (7) geführter Außendurchmesser (d) größer ist als der Ventilsitzdurchmesser, wobei im Widerlager (4) innerhalb des Außendurchmessers (d) wenigstens ein den Führungsbereich des Federwiderlagers (4) in der Schiebeführung (7) umgehender Durchgang (16) für Druckmittel vorgesehen ist, wobei der Durchgang (16) an der Federseite im Widerlager (4) eine erste Mündung (18) aufweist, die zumindest zum Teil außerhalb eines Kontaktbereiches (17) zwischen der Feder (6) und dem Widerlager (4) liegt, wobei an der Seite des Schließelementes (2) der Durchgang (16) eine zweite Mündung (19) am Widerlager (4) und/oder am Schließelement (2) aufweist, wobei der Durchgang (16) nur das Widerlager (4) oder das Widerlager (4) und das Schließelement (2) durchsetzt, und wobei der Durchgang (16) eine Bohrung mit zur Bewegungsrichtung des Schließelementes (2) paralleler oder gegenüber dieser schräger Bohrungsachse ist,
**dadurch gekennzeichnet, dass**
die Vorspannung der Feder (6) über eine Drehhandhabe (14) veränderbar ist.

2. Hydraulikventil (V) nach Anspruch 1, **dadurch gekennzeichnet, dass** am, vorzugsweise allgemein scheibenförmigen, Widerlager (4) an der Federseite eine Federzentrierung (5) vorgesehen ist, und dass der Durchgang (16) zumindest teilweise (16a) auch in der Federzentrierung (5) verläuft.

3. Hydraulikventil (V) nach Anspruch 1, **dadurch gekennzeichnet, dass** um das am Widerlager (4) zentrisch angeordnete Schließelement (2) mehrere gleich große oder verschieden große Durchgänge (16) mit gleichen oder ungleichen Formen regelmäßig oder unregelmäßig verteilt sind.

4. Hydraulikventil (V) nach wenigstens einem der vorhergehenden Ansprüche, **dadurch gekennzeichnet, dass** das Schließelement (2) zum Freigeben des Strömungsweges gegen die Feder (6) durch ein den Ventilsitz (1) durchsetzendes Entsperrglied (21) vom Ventilsitz (1) abhebbar ist.

5. Hydraulikventil (V) nach wenigstens einem der vorhergehenden Ansprüche, **dadurch gekennzeichnet, dass** das Schließelement (2) eine kugelige oder kegelige Sitzfläche (22) aufweist, und entweder in einer Fassung (20) am Widerlager (4) sitzt oder mit diesem einstückig ist.

6. Hydraulikventil (V) nach wenigstens einem der vorhergehenden Ansprüche, **dadurch gekennzeichnet, dass** das Hydraulikventil (V) ein Druckbegrenzungsventil ist.

7. Hydraulikventil (V) nach Anspruch 6, **dadurch gekennzeichnet, dass** das Druckbegrenzungsventil als Vorsteuerventil eines Reglers (R) einer Axialkolbenpumpe mit nach außen weisender Feder (6) in eine einen Kanal (8) schneidende und die Schiebeführung (7) enthaltende Bohrung des Reglergehäuses (9) eingebaut ist.

8. Hydraulikventil (V)nach wenigstens einem der vorhergehenden Ansprüche, **dadurch gekennzeichnet, dass** der Ventilsitz (1), das Schließelement (2) und das Widerlager (4) aus Stahl bestehen, und der Durchgang (16) eine Bohrung ist.

## Claims

1. Hydraulic valve (V), having a valve seat (1) with a closing element (2) which is loaded in the closing direction by a spring (6), which in the position raised from the valve seat (1) releases a flow path via which pressure medium flows from the side of the spring into the valve seat or vice versa, wherein between the spring (6) and the closing element (2) there is arranged an abutment (4) for the spring (6) which centres the closing element (2) on the valve seat (1) and whose outer diameter (d) guided in the directions of movement of the closing element in a sliding guide (7) is greater than the valve seat diameter,
at least one passage (16) for pressure medium, which bypasses the guide region of the spring abutment (4) in the sliding guide (7), being provided in the abutment (4) within the outer diameter (d), wherein the passage (16) on the spring side in the abutment (4) has a first opening (18) which lies at least partially outside a contact region (17) between the spring (6) and the abutment (4), the passage (16) having a second opening (19) on the abutment (4) and/or on the closing element (2) on the side of the closing element (2), the passage (16) passing through only the abutment (4) or the abutment (4) and the closing element (2), and the passage (16) being a bore with an axis parallel to the direction of movement of the closing element (2) or inclined relative thereto,
**characterized in that**
the preload of the spring (6) can be varied via a rotary handle (14).

2. Hydraulic valve (V) according to claim 1, **characterized in that** a spring centring means (5) is provided on the, preferably generally disc-shaped, abutment (4) on the spring side, and **in that** the passage (16) also extends at least partially (16a) in the spring centring means (5).

3. Hydraulic valve (V) according to claim 1, **characterized in that** a plurality of passages (16) of the same or different size and having the same or different shapes are distributed regularly or irregularly around the closing element (2) arranged centrally on the abutment (4).

4. Hydraulic valve (V) according to at least one of the preceding claims, **characterized in that** the closing element (2) can be lifted from the valve seat (1) to release the flow path against the spring (6) by an unlocking member (21) passing through the valve seat (1).

5. Hydraulic valve (V) according to at least one of the preceding claims, **characterized in that** the closing element (2) has a spherical or conical seat surface (22) and is either seated in a holder (20) on the abutment (4) or is integral therewith.

6. Hydraulic valve (V) according to at least one of the preceding claims, **characterized in that** the hydraulic valve (V) is a pressure relief valve.

7. Hydraulic valve (V) according to claim 6, **characterized in that** the pressure relief valve is installed as a pilot valve of a control unit (R) of an axial piston pump with outwardly pointing spring (6) in a bore of the control unit housing (9) intersecting a channel (8) and containing the sliding guide (7).

8. Hydraulic valve (V) according to at least one of the preceding claims, **characterized in that** the valve seat (1), the closing element (2) and the abutment (4) are made of steel, and the passage (16) is a bore.

## Revendications

1. Soupape hydraulique (V) comprenant un siège qui est associé à un obturateur (2) sollicité par un ressort (6) dans le sens d'obturation, ledit obturateur, dans sa position enlevée, ouvre la voie d'écoulement par laquelle s'effectue un écoulement de fluide sous pression depuis le côté ressort vers le siège ou inversement, entre le ressort (6) et l'obturateur (2) étant disposée une culée (4) pour le ressort destinée à centrer l'obturateur (2) sur le siège, le diamètre extérieur (d) de ladite culée (4), qui est guidé dans les directions de déplacement de l'obturateur par un guidage à coulisse (7), étant supérieur au diamètre du siège, dans ladite culée (4) à l'intérieur du diamètre extérieur (d) étant prévu au moins un passage (16) pour fluide sous pression, ledit passage évitant la zone de guidage de la culée (4) de ressort dans le guidage à coulisse (7), ledit passage (16) comprenant, côté ressort de la culée (4), une première ouverture (18) qui au moins en partie est située à l'extérieur d'une zone de contact (17) entre le ressort (6) et la culée (4), ledit passage (16) comprenant, côté obturateur (2), une seconde ouverture (19) dans la culée (4) et/ou l'obturateur (2), le passage (16) pénétrant seulement la culée (4) ou la culée (4) et l'obturateur (2), le passage (16) étant un alésage dont l'axe d'alésage est parallèle à la direction de déplacement de l'obturateur ou incliné par rapport à celle-ci,
**caractérisée en ce que**
la valeur de sollicitation du ressort (6) étant réglable par une poignée tournante (14).

2. Soupape hydraulique (V) selon la revendication 1, **caractérisée en ce que** sur la culée (4), qui de préférence est sensiblement en forme de disque, est prévu, côté ressort, un centrage (5) de ressort, et **en ce que** le passage (16) pénètre également, au moins partiellement (16a), le centrage (5) de ressort.

3. Soupape hydraulique (V) selon la revendication 1, **caractérisée en ce que** plusieurs passages (16) de grandeur identique ou différente et de forme identique ou différente sont disposées de façon régulière ou irrégulière autour de l'obturateur (2) disposé en position centrale de la culée (4).

4. Soupape hydraulique (V) selon au moins l'une des revendications précédentes, **caractérisée en ce que** l'obturateur (2), pour ouvrir la voie d'écoulement contre la sollicitation du ressort (6), peut être enlevé depuis le siège (1) par un organe de déblocage (21) pénétrant le siège (1).

5. Soupape hydraulique (V) selon au moins l'une des revendications précédentes, **caractérisée en ce que** la surface d'obturation (22) de l'obturateur (2) est de forme sphérique ou conique, et l'obturateur est soit monté dans un support (20) sur la culée (4) ou soit réalisé de façon intégrale avec celle-ci.

6. Soupape hydraulique (V) selon au moins l'une des revendications précédentes, **caractérisée en ce que** la soupape hydraulique (V) est une soupape de limitation de pression.

7. Soupape hydraulique (V) selon la revendication 6, **caractérisée en ce que** la soupape de limitation de pression est installée, en tant que soupape pilote d'un régulateur (R) d'une pompe à pistons axiaux, avec une orientation du ressort (6) vers l'extérieur dans un alésage du boîtier (9) de régulateur, l'alésage intersectant un conduit (8) et contenant le guidage à coulisse (7).

8. Soupape hydraulique (V) selon au moins l'une des revendications précédentes, **caractérisée en ce que** le siège (1), l'obturateur (2) et la culée (4) sont en acier, et le passage (16) est un alésage.
